# EUROPÄISCHE PATENTANMELDUNG

(11) **EP 2 594 511 A1**
(43) Veröffentlichungstag der Anmeldung: **22.05.2013**
(21) Anmeldenummer: 12193598.5
(22) Anmeldetag: 21.11.2012
(51) Int. Cl.: B65G 19/02, B65G 47/88

(54) **Stopper-Einheit für Klinkenförderer**

(30) Priorität: 21.11.2011 DE 102011119411
(71) Anmelder: SSI Schäfer Peem GmbH, 8051 Graz (AT)
(72) Erfinder: Winkler, Max, 8010 Graz (AT)
(74) Vertreter: Witte, Weller & Partner

(57) **Zusammenfassung**

Stopper-Einheit (30) für einen Hängeförderer (10) mit: einer Führung (34), die an dem Hängeförderer (10) befestigbar ist; einem Schlitten (36), der einen Anschlagabschnitt aufweist, wobei der Schlitten (36) mittels der Führung (34) linear beweglich gelagert ist; und einem Antrieb (38) der ausgebildet ist, während seiner Aktivierung den Schlitten (36) aus einer Freigabestellung, in welcher die Bügel (12) den Schlitten (36) passieren können, in eine Stoppstellung auszufahren, in welcher die Bügel (12) aufgestaut werden, wobei eine Federeinrichtung (42) zwischen dem Schlitten (36) und dem Antrieb (38) so angeordnet ist, dass der Schlitten (36), wenn der Antrieb (38) aktiviert ist, im Falle einer Krafteinwirkung in der Bewegungsrichtung des Schlittens (36) in die Freigabestellung zurückziehbar ist und im Falle einer Krafteinwirkung, die ausschliesslich quer zu dieser Richtung wirkt, in seiner momentanen Stellung verbleibt.

## Beschreibung

Die vorliegende Erfindung betrifft eine (auch nachträglich installierbare) Stopper-Einheit für einen Hängeförderer, der einen Klinkenmitnehmer in einem zumindest einseitig offenen Schlitz einer Tragschiene, auf welcher durch Klinkenmitnehmer Bügel gleitend transportiert werden, stromabwärts in einer Förderrichtung transportiert, die parallel zur Längsrichtung der Tragschiene orientiert ist.

Klinkenmitnehmer für Klinkenförderer werden allgemein in den Dokumenten DE 299 15 523 U1 und DE 298 09 909 U1 offenbart. Bei Klinkenförderern werden hängende Produkte, wie z.B. Kleidungsstücke auf Kleiderbügeln, mit Hilfe von Transporthaken auf Gleitschienen mit einem oberhalb der Gleitschiene geführten Zugglied gefördert, wobei an dem Zugglied eine Vielzahl von herabhängenden Klinken in Abständen schwenkbar befestigt sind. In der Regel weisen Förderer dieser Art endlose Ketten als Zugglieder auf, an denen die einzelnen Klinken in Abständen befestigt sind. Die Klinken sind schwenkbar an der Kette angebracht, so dass sie herabhängen und mit ihren Mitnehmerhaken die einzelnen Transporthaken (Bügel) mitnehmen. Derartige Transporthaken sind bspw. die Haken von Kleiderbügeln, die in Textilbetrieben häufig als Transportmittel für Kleidungsstücke verwendet werden.

In dem deutschen Gebrauchsmuster DE 203 11 926 U1 wird eine Hängeförderanlage offenbart. Auch hier ist an einem mit dem Hängeförderer verbundenen Träger eine Klinke um eine in der Förderrichtung voreilende Achse schwenkbar angelenkt, an deren in Förderrichtung nacheilendem Ende ein Mitnehmerhaken schwenkbar angelenkt ist, der mittels einer Zugfeder in Förderrichtung vorgespannt ist. Als Zugglied kommt wiederum eine Förderkette zum Einsatz. Die Förderkette trägt an ihrer Unterseite Klinkenmitnehmer. Jeder Klinkenmitnehmer weist einen Träger auf, an dem eine Klinke mittels eines Gelenks schwenkbar angebracht ist, und zwar an dem in der Förderrichtung voreilenden Ende der Klinke bzw. des Trägers. Die Klinke weist an ihrem - bezogen auf die Förderrichtung - nacheilenden Ende einen Mitnehmerhaken auf, der nach unten zur Förderschiene hin gerichtet ist. Bezogen auf die Förderrichtung befindet sich eine gegenüber dem Haken voreilende Ausnehmung in der Klinke. Wiederum gegenüber dieser Ausnehmung voreilend ist eine Schaltnocke in Form einer an der Unterseite der Klinke ausgebildeten nach unten gewölbten Fläche vorgesehen. An einer beliebig wählbaren Stelle der Förderschiene kann ein sog. Klinkenöffner vorgesehen werden. Mit dem Klinkenöffner lassen sich eingehängte Bügel von der Klinke lösen. Ausgehängte Bügel werden am Ort des Klinkenöffners gestaut. Die Förderschiene weist eine nach oben offene Vertiefung auf, in welcher ein doppelarmiger Öffnungshebel schwenkbar gelagert ist. In einer Ruhestellung liegt der Öffnungshebel innerhalb der Vertiefung, so dass eingehängte Bügel ungehindert passieren können. In einer Arbeitsstellung ist der Öffnungshebel aus der Vertiefung herausgeschwenkt. Die Schaltnocke einer heraneilenden Klinke kommt dann mit einem vorderen Teil des herausgeschwenkten Öffnungshebels in Kontakt. Die Klinke wird dadurch nach oben geschwenkt, d.h. von der Förderschiene weggeschwenkt. Der Bügel wird so freigegeben.

Derartige Klinken besitzen eine sog. "Power-and-Free-Funktion". Je Klinke wird in der Regel ein Bügel gefördert. Manchmal werden aber auch mehrere Bügel gefördert.

Der oben beschriebene Öffner (Stopper) hat den Nachteil, dass der Planer, um den Stopper einzubauen, bereits in der Planungsphase festlegen muss, an welchem Ort sich der Stopper später befinden soll. Ein späteres Versetzen oder nachträgliches Platzieren des Stoppers ist sehr zeitaufwändig. Zusätzliche Stopper "vor Ort" zu installieren ist sehr aufwändig. Man muss die Förderschiene aufsägen und zusätzliche Halter anbringen. Um einen Öffnungshebel unten in die Schiene zu integrieren, müssen Löcher oder Schlitze von oben in die Förderschiene eingefügt werden. In diesen Löchern oder Schlitzen können sich Bügelhaken verfangen. Es kann zu einem ungewollten Stopp oder sogar zu einer Beschädigung kommen.

Das Dokument DE 196 14 905 A1 offenbart eine Fördertasche für einen Hängeförderer mit einer Abgabestation. Das Dokument DE 90 03 011 U1 offenbart eine Vereinzelungsvorrichtung für Kleiderbügel. Das Dokument DE 103 17 742 B3 offenbart einen Stau-Abschnitt für eine Hänge-Förderanlage mit Klinkenabnehmern.

Es ist daher eine Aufgabe der vorliegenden Erfindung, eine verbesserte Stopper-Einheit vorzusehen, die auch nachträglich installierbar ist.

Diese Aufgabe wird gelöst durch eine Stopper-Einheit für einen Hängeförderer, der einen Klinkenmitnehmer in einem zumindest einseitig offenen Schlitz einer Tragschiene, auf welcher Bügel durch Klinkenmitnehmer gleitend transportiert werden, stromabwärts in einer Förderrichtung transportiert, die parallel zur Längsrichtung der Tragschiene orientiert ist, mit: einer Führung, die an dem Hängeförderer befestigbar ist; einem Schlitten, der einen Anschlagabschnitt aufweist, wobei der Schlitten mittels der Führung, vorzugsweise linear, in einer Querrichtung, die quer zur Längsrichtung der Tragschiene orientiert ist, beweglich gelagert ist; und einem Antrieb, der an den Schlitten gekoppelt ist und der ausgebildet ist, während seiner Aktivierung den Schlitten aus einer Freigabestellung, in welcher der Anschlagabschnitt des Schlittens die Tragschiene nicht überragt, so dass die Bügel den Schlitten passieren können, entlang der Querrichtung in eine Stoppstellung auszufahren, in welcher der Anschlagabschnitt die Tragschiene, vorzugsweise über ihre gesamte Breite B, überragt; wobei der Schlitten, wenn der Antrieb aktiviert ist, im Falle einer Krafteinwirkung in der Querrichtung in die Freigabestellung zurückziehbar ist und im Falle einer Krafteinwirkung, die ausschließlich in der Längsrichtung wirkt, in seiner momentanen Stellung verbleibt.

Die Stopper-Einheit der Erfindung ist nachträglich montierbar. Die Stopper-Einheit kann seitlich montiert werden, ohne die Tragschiene zu zersägen oder zu demontieren. Die Stopper-Einheit kann an jeder beliebigen Stelle des Förderwegs montiert werden. Die Stopper-Einheit ist zweistufig ausgelegt, wobei eine erste Stufe des Schlittens federbelastet ist. Trifft der Schlitten beim Einfahren einen Bügel oder gar eine Klinke, wirkt maximal eine geringe Kraft der Federeinrichtung auf den Bügel bzw. die Klinke. Ex kommt zu keinen Beschädigungen. Sobald das Hindernis (Bügel/Klinke) vorbeigefahren ist, wirkt eine zweite Stufe des Schlittens. Der Schlitten fährt vollständig zwischen die Klinken und Bügel aus. Der Schlitten hält in dieser Stellung die weiteren Klinken an und die Bügel werden vor dem Schlitten aufgestaut.

Trifft der Schlitten jedoch einen Bügel, wird der Bügel von der im Eingriff befindlichen Klinke weitertransportiert und nicht willkürlich freigelassen.

Die Transportschiene wird nicht unterbrochen und benötigt keine zusätzlichen Löcher oder Schlitze zur Montage der Stopper-Einheit, in denen sich die Bügel oder die Haken verfangen könnten.

Die Stopper-Einheit kann jederzeit an jeder Stelle montiert oder nachgerüstet werden. Die Stopper-Einheit ist absolut fehlertolerant. Sie ist einfach und kostengünstig herzustellen. Es gibt keinen undefinierten Zustand, wenn der Schlitten aktiviert wird und dann einen Bügel oder eine Klinke trifft.

Gemäß einer bevorzugten Ausführungsform weist der der Anschlagabschnitt an seinem, zur Tragschiene orientierten, freien Ende eine erste Stirnfläche auf, die schräg zur Längsrichtung der Tragschiene orientiert ist, so dass das freie Ende stromaufwärts eine Spitze definiert.

Die schräg orientierte erste Stirnfläche wird zur Krafteinleitung für den Fall benötigt, dass der Schlitten während seiner Aktivierung eine Klinke oder einen Bügel trifft, die die Stopper-Einheit gerade passieren. Dort wird die rücktreibende Kraft durch den Bügel selbst eingeleitet, um eine Beschädigung der Anlage zu verhindern.

Weiter ist es von Vorteil, wenn der Anschlagabschnitt eine zweite Stirnfläche aufweist, die parallel zur Längsrichtung orientiert ist und die sich stromaufwärts an die erste Stirnfläche anschließt, wobei die zweite Stirnfläche die Spitze definiert.

Die zweite (parallele) Stirnfläche kann flächig in Kontakt mit der Klinke treten und führt die Klinke am Schlitten vorbei, bis der Bügel die erste Schrägfläche erreicht. Auch so werden Beschädigungen vermieden.

Einer weiteren bevorzugten Ausgestaltung weist die Stopper-Einheit ferner eine Federeinrichtung auf, die zwischen dem Schlitten und dem Antrieb angeordnet ist, so dass der Schlitten im aktivierten Antrieb in seine Freigabestellung zurück bewegbar ist, wobei der Schlitten vorzugsweise einen Federkontaktabschnitt aufweist.

Die Federeinrichtung nimmt die Kraft auf, die der Antrieb während eines Wechsels des Schlittens aus der Freigabestellung in die Stoppstellung auf den Schlitten ausübt, obwohl sich der Schlitten aufgrund eines im Weg befindlichen Klinkenmitnehmers nicht vollständig über die gesamte Breite der Tragschiene ausfahren lässt. Eine Beschädigung der Stopper-Einheit wird so verhindert.

Weiter ist es bevorzugt, wenn der Antrieb einen Zylinder mit einer Kolbenstange aufweist, wenn die Kolbenstange mit einem Verbindungselement verbunden ist, wenn das Verbindungselement mit einem Schaft verbunden ist, der frei beweglich in einer Öffnung des Schlittens gelagert ist, und wenn die Federeinrichtung zwischen dem Schlitten und dem Verbindungselement angeordnet ist.

Die Stopper-Einheit wird seitlich zur Tragschiene positioniert und ist deshalb gut zu Zwecken der Montage und Wartung zugänglich. Die vorbekannten Weichen bzw. Öffner waren in die Tragschiene integriert und nicht gut zugänglich bzw. zu warten.

Weiter ist es von Vorteil, wenn die Stopper-Einheit ferner aufweist: eine Tragschienenerhöhung, die mit der Tragschiene verbindbar ist und die so ausgebildet ist, dass sich eine Höhe eines Zwischenraums zwischen der Tragschiene und dem, die Tragschiene in der Stoppstellung überragenden, Schlitten stromabwärts derart verringert, dass ein Bügel, der nicht im Eingriff mit einem der Klinkenmitnehmer ist, zwar in den Zwischenraum eindringen, aber den Zwischenraum nicht stromabwärts passieren kann.

Durch diese Maßnahme können Bügel unterschiedlicher (Draht-) Hakenstärke gehandhabt werden, ohne fehleranfällig zu sein.

Bei einer weiteren bevorzugten Ausführungsform ist die Tragschienenerhöhung an eine Form der Tragschiene derart angepasst, dass die Tragschienenerhöhung einen Teil der Tragschiene ersetzt oder von außen auf die Tragschiene aufsteckbar und dort fixierbar ist.

Die Tragschiene muss zur Montage der Stopper-Einheit nicht aufgesägt oder anders manipuliert werden. Die Tragschienenerhöhung wird von außen einfach aufgesteckt und an einer beliebigen Stelle fixiert. Die Montage ist einfach und schnell.

Bei einer weiteren vorteilhaften Ausgestaltung weist die Tragschienenerhöhung eine Erhebung auf, die über eine Gleitfläche der Tragschiene hinausragt und die vorzugsweise eine ansteigende Flanke, ein zur Gleitfläche parallel verlaufendes Plateau sowie eine abfallende Flanke aufweist.

Ferner ist es von Vorteil, wenn jeder Bügel einen Bügelkopf aufweist, der in einem Zustand, in welchem der Bügel auf der Tragschiene gleitend transportiert wird, einen, vorzugsweise runden, Querschnitt mit einem Zentrum in einer Ebene senkrecht zur Querrichtung aufweist, und wobei eine Unterseite des Anschlagabschnitts in einer Höhe relativ zu einer Gleitfläche der Tragschiene angeordnet ist, die größer als eine Höhe des Zentrums relativ zur Gleitfläche ist.

Durch diese Anordnung ist gewährleistet, dass sich im Eingriff befindliche Bügel unter den Anschlag gezogen werden, um weiter stromabwärts derart auf den Anschlag einzuwirken, dass die Klinke die Stopper-Einheit passieren kann, ohne diese zu beschädigen.

Außerdem ist es bevorzugt, wenn der Schlitten ferner einen Führungsabschnitt aufweist, wobei die Führung eine Schlittenführungsschiene aufweist, die so ausgebildet ist, dass der Führungsabschnitt des Schlittens, vorzugsweise formschlüssig, entlang der Querrichtung in der Schlittenführungsschiene gleitet.

Bei einer besonderen Ausgestaltung weist der Antrieb ein Gehäuse auf.

Ferner ist es bevorzugt, wenn die Gleitfläche der Tragschiene und eine Unterseite des Anschlagsabschnitts in zwei zueinander parallelen beabstandeten Ebenen liegen.

Bei einer weiteren Ausführungsform kann der Anschlagabschnitt relativ zu einem der Klinkenmitnehmer, der im Eingriff mit einem Bügel ist und der die Stopper-Einheit gerade passiert, während einer Bewegung in die Stoppstellung in der Höhe flexibel auslenkbar sein, was es ermöglicht, dass sich der im Eingriff befindliche Bügel unter dem Anschlagabschnitt in der Förderrichtung bewegen lässt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figuren 1A-1C: verschiedene Ansichten eines Hängeförderers gemäß der Erfindung;
- Figuren 2A-2C: jeweils verschiedene Ansichten unterschiedlicher Momente während eines Stoppvorgangs mit der Stopper-Einheit gemäß der Fig. 1;
- Figuren 3A-3E: verschiedene Seitenansichten der Stopper-Einheit der Fig. 1 in unterschiedlichen Vergrößerungen;
- Figuren 4A-4B: Draufsichten auf die Stopper-Einheit der Fig. 1 zur Verdeutlichung der Situation gemäß der Fig. 2B; und
- Fig. 5: eine Draufsicht auf einen abgewandelten Schlitten.

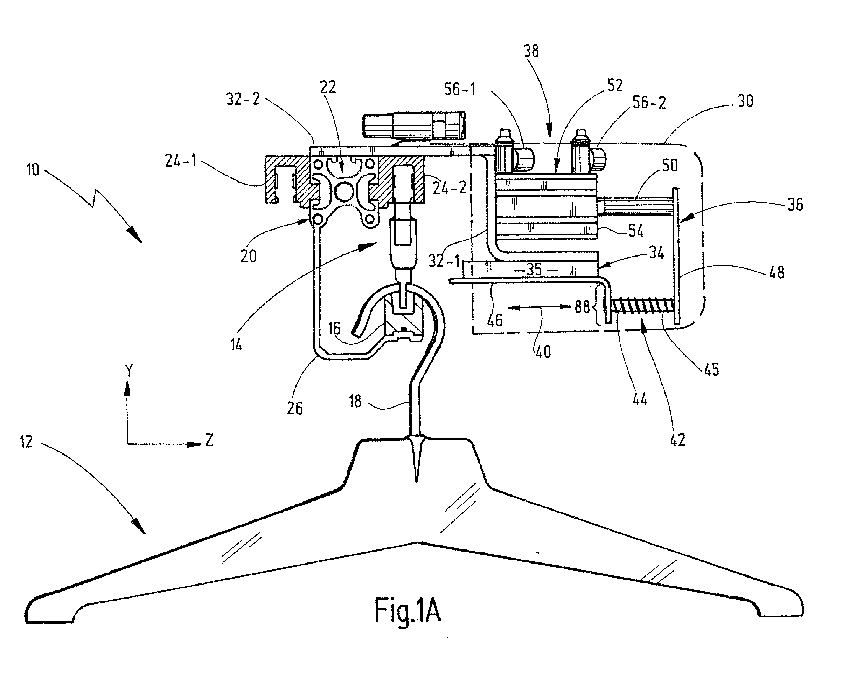

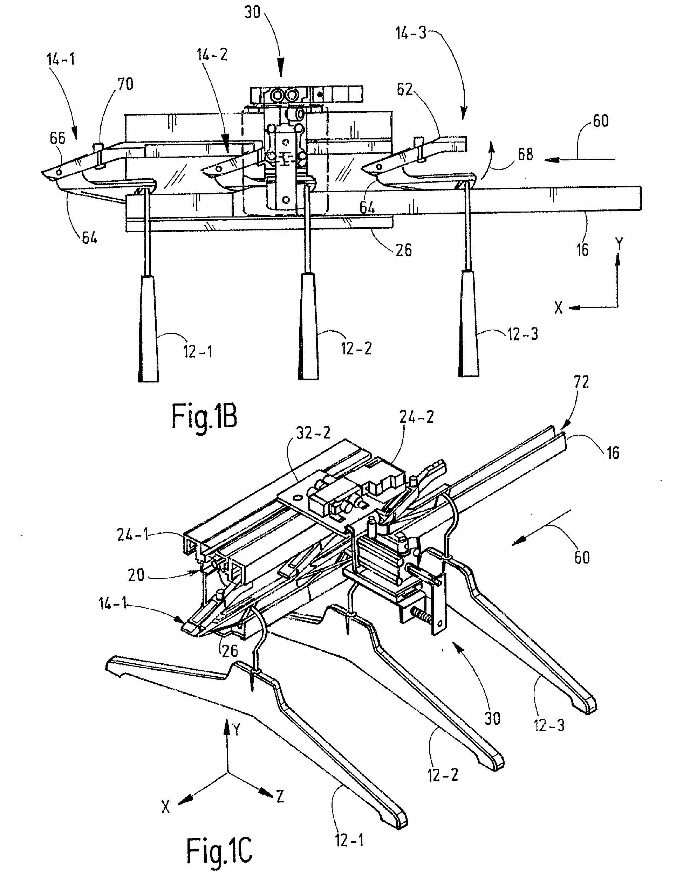

Unter Bezugnahme auf die Figuren 1A-1C wird nachfolgend der Aufbau einer Stopper-Einheit 30 gemäß der Erfindung beschrieben werden, die bei einem Hängeförderer bzw. in einer Förderanlage 10 zum Einsatz kommt, wobei die Beschreibung unter gemeinsamer Bezugnahme auf alle Ansichten der Figuren 1A-1C erfolgen wird. Die Fig. 1A zeigt eine teilweise geschnittene Vorderansicht in einer Längsrichtung X auf den Hängeförderer 10. Fig. 1B zeigt eine Seitenansicht des Hängeförderers 10 und Fig. 1C zeigt eine perspektivische Ansicht des Hängeförderers 10 der Figuren 1A und 1B.

Mit dem Hängeförderer 10 werden Bügel 12 mittels Klinkenmitnehmern 14 gleitend auf einer Tragschiene 16 transportiert. Die Tragschiene 16 ist nach oben hin (einseitig) offen, um die Klinkenmitnehmer 14 zumindest teilweise in sich aufnehmen zu können und in der Längsrichtung X zu führen. Es versteht sich, dass mit der Tragschiene 16, die exemplarisch gradlinig gezeigt ist, beliebige Kurvenverläufe inklusive Steigungen und Gefällen dargestellt werden können. Aus Gründen einer vereinfachten Beschreibung ist die Tragschiene 16 vorliegend ausschließlich geradlinig und in einer waagerechten (horizontalen) Lage dargestellt. Die Bügel 12 sitzen mit ihren Haken 18 an zwei Punkten auf der Tragschiene 16 mit einem z.B. U-förmigen Querschnitt auf. Es versteht sich, dass bei einer anderen Querschnittsform mehr oder weniger Kontaktpunkte mit dem vorzugsweise kreisförmigen, seitlich nach unten offenen Haken 18 vorhanden sind.

Die Tragschiene 16 wird - üblicherweise über Kopf - von einem Halteprofil 20 getragen. Das Halteprofil 20 kann eine oder mehrere Nuten 22 (Fig. 1A) in seinen Seitenflächen zwecks Befestigung weiterer Komponenten des Hängeförderers 10 aufweisen. In den seitlichen Nuten 22 des Halteprofils 20 sind z.B. U-förmige, nach unten offene Führungsprofile 24 eingefügt. Die Querschnittsform der Führungsprofile 24 ist beliebig wählbar und vorzugsweise an den Querschnitt eines Zugglieds, wie z.B. einer Förderkette, angepasst. Im rechts dargestellten Führungsprofil 24-2 (Fig. 1A) ist ein Trum einer endlos umlaufenden Förderkette gezeigt, welches mit den Klinkenmitnehmern 14 verbunden ist.

Das Halteprofil 20 kann ein L-förmiges Verbindungselement 26 aufweisen, welches die Tragschiene 16 trägt. Es versteht sich, dass das Verbindungselement 26 lediglich, direkt über der Länge einer Förderstrecke, verteilt vorgesehen sein kann und sich nicht über die gesamte Länge der Tragschiene 16 erstrecken muss, die üblicherweise kontinuierlich ausgebildet ist.

Die Stopper-Einheit 30 der Erfindung wird nachfolgend beschrieben. Die Stopper-Einheit 30 kann ein, z.B. Z-förmiges, Halteelement 32 (z.B. Schiene, Profil, etc.) aufweisen, mit dem eine Führung 34 seitlich zur Tragschiene 16 am Halteprofil 20 befestigt wird. Das Halteelement 32 kann z.B. in der Nut 22 in der Oberseite des Halteprofils 20 fixiert werden. Das Halteelement 32 ist vorzugsweise so ausgestaltet, dass die Führung 34 auf Höhe des Bügels 12 im Klinkenmitnehmer 14 angeordnet ist, wo der Klinkenmitnehmer 14 den Haken 18 des Bügels 12 greift und im Normalzustand mitnimmt. Im Beispiel der Fig. 1A ist die Führung 34 an einer Unterseite eines horizontalen Schenkels des Halteelements 32 vorgesehen, der von dem Halteprofil 20 abgewandt ist. Ein dem Halteprofil 20 zugewandter horizontaler Schenkel 32-2 des Halteelements 32 ist über einen vertikalen Schenkel 32-1 des Halteelements 32 mit dem abgewandten Schenkel des Halteelements 32 verbunden.

Die Führung 34 dient zur Aufnahme eines horizontal quer zur Längsrichtung X beweglich gelagerten Schlittens 36 (Fig. 1A). Der Schlitten 34 kann in einer Schlittenführungsschiene 35 aufgenommen und geführt sein. Die Aufnahme kann formschlüssig erfolgen. In der Vorderansicht der Fig. 1A ist der Schlitten 36 z.B. L-förmig mit einem kurzen vertikalen Schenkel und einen längeren horizontalen Schenkel bzw. Anschlag 46 ausgebildet.

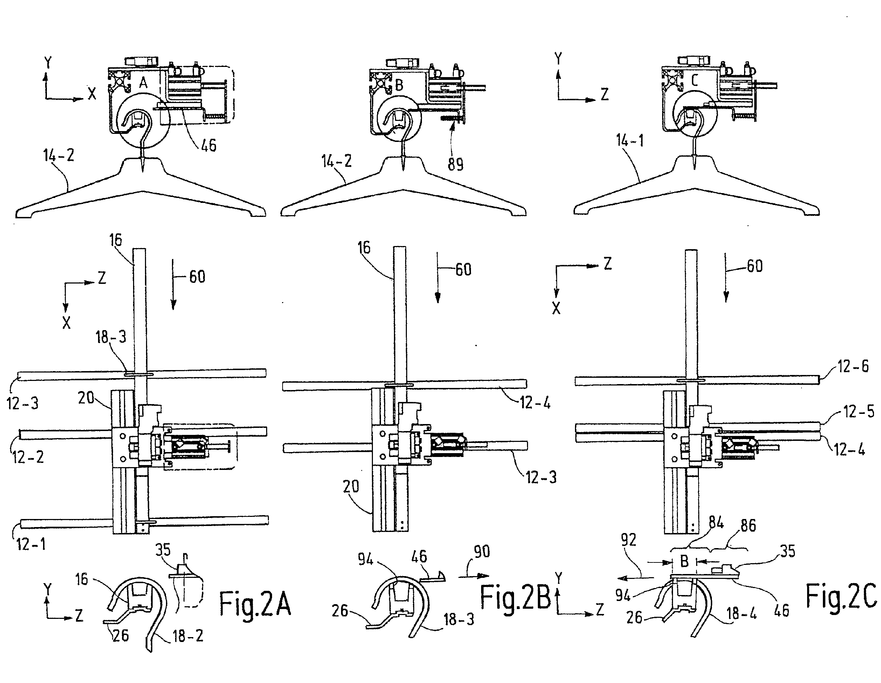

Der Schlitten 36 lässt sich mit einem Antrieb 38 in Höhe eines Scheitelpunkts der Haken 18 quer, hier in Z-Richtung, mit einem geringen Abstand vollständig über die Tragschiene 16 ausfahren, wie es unter Bezugnahme auf Fig. 2C noch näher erläutert werden wird. In der Fig. 1A sowie in der Fig. 2A ist jeweils eine Freigabestellung der Stopper-Einheit 30 gezeigt, in der der Schlitten soweit relativ zur Tragschiene 16 zurückgezogen ist, dass die Klinkenmitnehmer 14, insbesondere mit eingehängten Bügeln 12, kollisionsfrei passieren können. Die Beweglichkeit des Schlittens 36 ist in der Fig. 1A mit einem Doppelpfeil 40 angedeutet, der sich parallel zur Z-Richtung erstreckt und somit senkrecht zur Längsrichtung X orientiert ist. Die senkrechte Orientierung ist besonders bevorzugt. Der Schlitten 36 kann aber auch leicht schräg zur Tragschiene 16 bewegt werden, z.B. in einem Winkel zwischen 70° und 89° (in der XZ-Ebene). Die Führung des Schlittens 36 übernimmt die Schlittenführungsschiene 35, die ausgelegt ist, Kräfte aufzunehmen und an das Halteprofil 20 weiterzuleiten, die senkrecht zur Betätigungsrichtung 40 des Schlittens 36 orientiert sind.

Der Antrieb 38 kann oberhalb der Schlittenführungsschiene 35 und des Schlittens 36 z.B. im Bereich des vertikalen Schenkels 32-1 und des horizontal abgewandten Schenkels des Halteelements 32 positioniert sein. Zwischen dem Antrieb 38 und dem Schlitten 36 ist eine Federeinrichtung 42 vorgesehen sein. In der Fig. 1 ist exemplarisch eine Spiralfeder 44, die sich um einen zylinderförmigen Schaft 45 erstreckt, der den Schlitten 36 durch eine Öffnung 89 (Fig. 2B oben) im vertikalen Schenkel des Schlittens 36 durchdringen kann. Der horizontal orientierte Schaft 45 ist fest mit einem vertikal angeordneten Verbindungselement 48 verbunden. Das Verbindungselement 48 ist wiederum mit einer Kolbenstange 50 des Antriebs 38 verbunden, der exemplarisch in Form eines (Pneumatik-) Zylinders 52 implementiert ist. Das Gehäuse 54 des Antriebs 38 umhüllt den Zylinder 52. Die Kolbenstange 50 bewegt sich in der horizontalen Richtung Z im Zylinder 52 und veranlasst so die Bewegung 40 des Schlittens 36 über das Verbindungselement 48. Das Verbindungselement 48 koppelt kraftschlüssig über die Federeinrichtung 42 an den Schlitten 36. Wird eine Ausfahrbewegung des Schlittens 36 (Bewegung nach links in Fig. 1A) durch ein Hindernis, wie z.B. einem Klinkenmitnehmer 14 und/oder einen Bügel 12 bzw. Haken 18 behindert, kann die Federeinrichtung 42 komprimiert werden. Der Schaft 45 greift dann durch den Schlitten 36 hindurch, wie es unter Bezugnahme auf Fig. 2B noch näher erläutert werden wird. In diesem Zustand verweilt der Schlitten 36 vorübergehend und hat somit die Möglichkeit dem Hindernis auszuweichen. Aus diese Weise wird es erreicht, dass zerstörerische Kollisionen vermieden werden.

Es versteht sich, dass andere Federeinrichtungen 42 anstatt der Spiralfeder 44 eingesetzt werden können, wie z.B. Blattfedern, Gasdruckfedern oder Ähnliches.

Des Weiteren sind in der Fig. 1A exemplarisch zwei (Pneumatik-) Anschlüsse 56-1 und 56-2 zur Versorgung des Antriebs 38 bzw. des Zylinders 52 mit Druckluft dargestellt.

Fig. 1B zeigt eine Seitenansicht der Stopper-Einheit 30 der Fig. 1A. Es sind exemplarisch drei Bügel 12-1, 12-2 und 12-3 gezeigt, die stromabwärts in einer Förderrichtung 60 transportiert werden, die z.B. parallel zur Längsrichtung X orientiert ist. Der am weitesten stromabwärts befindliche Bügel 12-1 hat die Stopper-Einheit 30 passiert, ohne gelöst zu werden. Der mittlere Bügel 12-2 befindet sich genau im Bereich der Stopper-Einheit 30 und ist noch im Eingriff mit dem Klinkenmitnehmer 14-2. Der am weitesten stromaufwärts gelegene Bügel 12-3 befindet sich flusstechnisch vor der Stopper-Einheit 30.

In der Fig. 1B sind Tragarme 62 der Klinkenmitnehmer 14 zu erkennen, die mit einer (nicht näher dargestellten) Förderkette in Verbindung stehen. Unterhalb der Tragarme 62 ist jeweils eine Klinke 64 gelenkig gelagert, die um eine Schwenkachse 66 schwenkbar ist. Die Schwenkachse 66 ist im Bereich eines stromabwärts gelegenen Ende des Tragarms 62 angeordnet und vorliegend parallel zur Querrichtung Z orientiert. Eine Schwenkbewegung 68, mit der die Klinken 64 geöffnet werden können, um die Bügel 12 außer Eingriff mit den Klinkenmitnehmern 14 zu bringen, ist in der Fig. 1B durch einen Pfeil angedeutet. Die Kopplung der Tragarme 62 an die nicht dargestellte Förderkette kann über Koppelelemente 70 erfolgen.

Die Klinkenmitnehmer 14 können in einem (vertikalen) Schlitz 72 in der Tragschiene 16 geführt werden, wie es in der perspektivischen Ansicht der Fig. 1C gut zu erkennen ist.

Unter Bezugnahme auf die Figuren 2A-2C werden nachfolgend verschiedene Zustände der Stopper-Einheit 30 der Erfindung beschrieben. Fig. 2A zeigt verschiedene Ansichten einer klassischen Freigabestellung. Die Ansichten der Fig. 2B zeigt eine Freigabestellung im "engeren Sinne". Die Ansichten der Fig. 2C zeigen eine Stoppstellung des Schlittens 36 bzw. der Stopper-Einheit 30. Jede der Figuren 2A-2C zeigt eine Vorderansicht (oben) analog zur Fig. 1A, eine Draufsicht (Mitte) sowie einen vergrößerten Ausschnitt (unten) der oberen Vorderansicht. Die Vergrößerung ist in der oberen Vorderansicht jeweils durch einen mit A, B bzw. C bezeichneten Kreis angedeutet.

Fig. 2A zeigt die klassische (normale) Freigabestellung, in welche der Schlitten 36 mit seinem Anschlag 46 vollständig in der positiven Z-Richtung zurückgezogen ist, indem die Kolbenstange 50 (Fig. 1A) entsprechend ausgefahren ist. Somit kann es zu keiner Kollision zwischen dem Schlitten 36 und den Haken 18 der Bügel 12 kommen. Alle in der Fig. 2A gezeigten Bügel 12-1 bis 12-3 können die Stopper-Einheit 30 kollisionsfrei passieren.

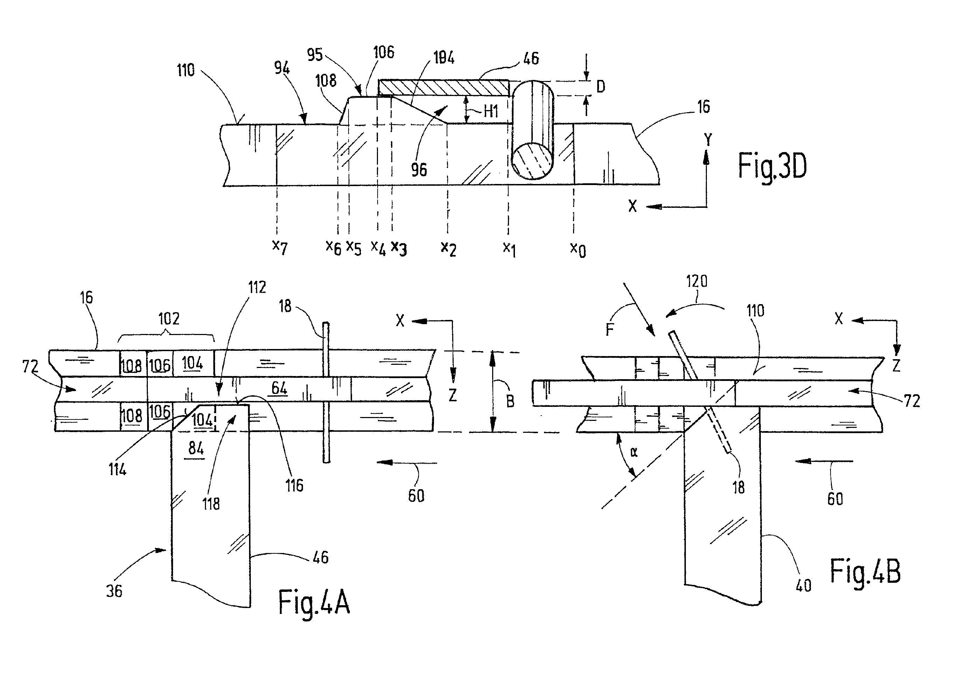

Die Fig. 2B zeigt die Stopper-Einheit 30 zu einem (leicht) späteren Zeitpunkt, bei dem eine übergeordnete (nicht dargestellte) Steuerung (z.B. Materialflussrechner) an die Stopper-Einheit 30 ein Signal ausgibt, das die Stopper-Einheit 30 dazu veranlasst, den Schlitten 36 durch Einziehen des Kolbens 50 in der negativen Z-Richtung auszufahren. Wenn dieser Befehl zu einem Zeitpunkt umgesetzt wird, in welchem der dritte Bügel 12-3 (mit seinem zugeordneten Klinkenmitnehmer 14-3) gerade den Schlitten 36 passiert, kann es passieren, dass der Anschlag 46 nicht voll über eine gesamte Breite B (Fig. 2C unten) der Tragschiene 16 ausgefahren werden kann, sondern an den Klinkenmitnehmer 14-3, der in der Fig. 2B nicht gezeigt ist, oder direkt an den Haken 18-3 des Bügels 12-3 anstößt. Der Schlitten 36 kann gegen die Kraft der Spiralfeder 44 zurückbewegt werden (vgl. Pfeil 90), und zwar entlang der positiven Z-Richtung, auch wenn der Antrieb 38 über die Kolbenstange 50 eigentlich eine Bewegung in der entgegengesetzten Richtung verlangt. In der Vorderansicht (oben) der Fig. 2B ist gut zu erkennen, wie der Schaft 45 durch eine Öffnung 89 in einem Federkontaktabschnitt 88 (Fig. 1A) hindurchtritt, der durch den kürzeren vertikalen Schenkel des Schlittens 36 realisiert ist. Unter Bezugnahme auf die Figuren 4A und 4B wird nachfolgend noch genauer erläutert werden, wie es möglich ist, dass der Anschlag 46 des Schlittens 36 die Rückzugsbewegung 90 durchführt, obwohl der Schlitten 36 anstoßend gegen einen Klinkenmitnehmer 14 ausgefahren ist.

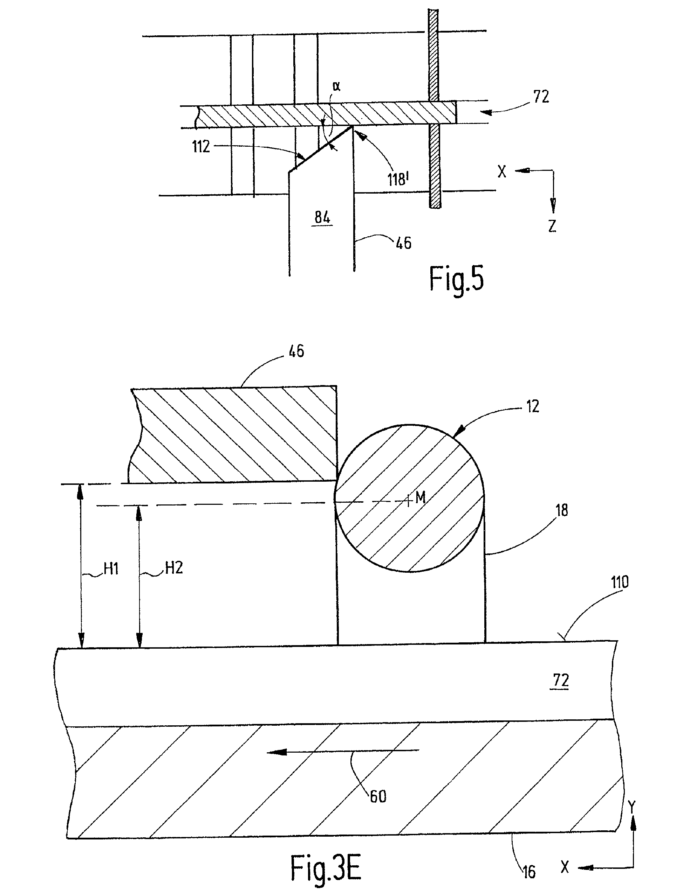

Fig. 2C zeigt die Stoppstellung der Stopper-Einheit 30. In der Stoppstellung ist der Anschlag 46 des Schlittens 36 soweit in der negativen Z-Richtung ausgefahren (vgl. Pfeil 92, unten), dass der Schlitten 36 die Tragschiene 16 mit seinem Anschlagabschnitt 84 vollständig übergreift. Der Anschlagabschnitt 84 ist in vertikaler Richtung (Y-Richtung) leicht gegenüber einer Oberseite der Tragschiene 16 beabstandet, wie es unter Bezugnahme auf die Figuren 3D und 3E noch näher erläutert werden wird. Die Fig. 2C zeigt die Stopper-Einheit 30 zu einem späteren Zeitpunkt als die Fig. 2B. Der (getroffene) Bügel 12-3 hat die Stopper-Einheit 30 passiert, so dass einer vollständig Ausfahrbewegung 92 des Schlittens 36 kein Hindernis mehr entgegensteht, da der dritte Bügel 12-3 und der vierte Bügel 12-4 ausreichend in der Förderrichtung 60 zueinander beabstandet waren. Deshalb werden die nachfolgenden Bügel 12-4 bis 12-6 am Anschlagabschnitt 84 des Schlittens 36 gestaut. Der Anschlagabschnitt 84 bewirkt mit seiner stromaufwärts gelegenen Kante, dass die Klinken 64 um die Schwenkachse 66 (Fig. 1B) nach oben geschwenkt werden (vgl. Pfeil 68), um die Bügel 12 freizugeben, während die Klinkenmitnehmer 14 kontinuierlich stromabwärts bewegt werden.

Man erkennt in der unteren vergrößerten Darstellung der Fig. 2C, dass der Anschlagabschnitt 84 die Tragschiene 16 über ihre vollständige Breite B überragt. Somit wirken ausschließlich senkrechte Kräfte auf den Schlitten 36, die eine Rückzugbewegung 90 nicht initiieren können. An den Anschlagabschnitt 84 schließt sich in der Querrichtung Z ein Führungsabschnitt 86 des Schlittens 36 an. Der Anschlagabschnitt 84 und der Führungsabschnitt 86 definieren den langen Schenkel bzw. Anschlag 46 (vgl. Fig. 1A) des L-förmigen Schlittens 36. Der Führungsabschnitt 86 kann an seiner Oberseite eine Feder aufweisen, die nach oben vorsteht und formschlüssig mit einer entsprechend nach unten geöffneten Nut, die in der Fig. 2C nicht näher gezeigt ist, der Schlittenführungsschiene 35 korrespondiert.

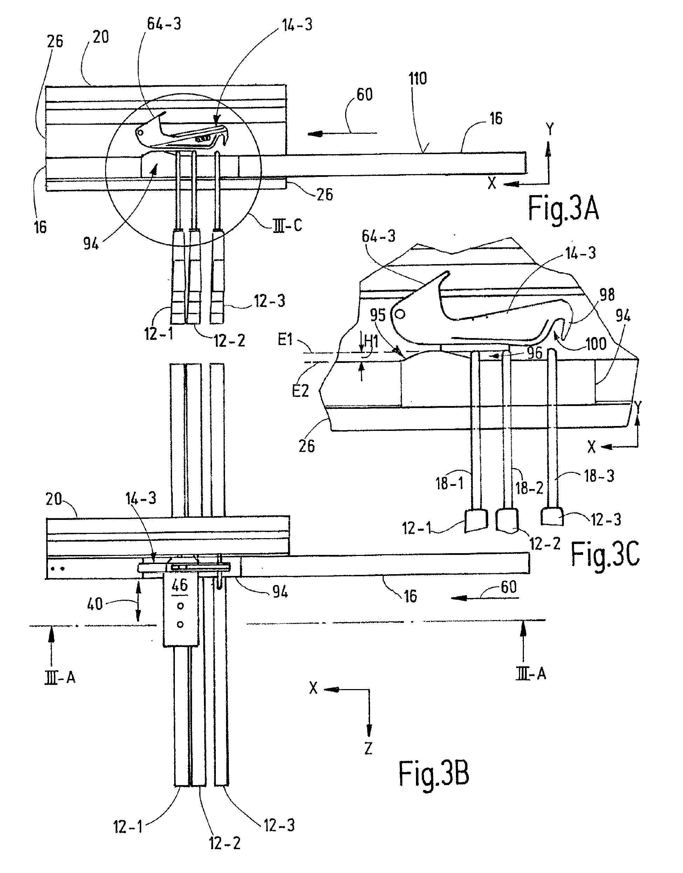

Die Figuren 3A-3E zeigen verschiedene Ansichten der Stopper-Einheit 30 in unterschiedlichen Vergrößerungen in der Stoppstellung. Fig. 3A zeigt eine Seitenansicht. Fig. 3B zeigt eine Draufsicht. Fig. 3C zeigt eine Vergrößerung eines Bereichs, der in Fig. 3A mit einem Kreis umrandet ist. Fig. 3D zeigt eine Seitenansicht ähnlich der Fig. 3C, wobei nur isolierte Teile dargestellt sind. Fig. 3E zeigt eine stärker schematisierte Seitenansicht der Fig. 3D.

In der Fig. 3A ist zusätzlich zu den bisher erläuterten Elementen der Stopper-Einheit 30 eine Tragschienenerhöhung 94 gezeigt. Die Tragschienenerhöhung bzw. Erhöhung 94 ist an die Form der Tragschiene 16 angepasst. Die Tragschienenerhöhung 94 kann einen Teil der Tragschiene 16 ersetzen, wobei die Übergänge zwischen der Tragschiene 16 und der Tragschienenerhöhung 94 kontinuierlich sein sollten, so dass die Tragschienenerhöhung 94 für den Transport der Bügel 12 kein Hindernis darstellt, wenn sich die Stopper-Einheit 30 in der Freigabestellung befindet. Die Tragschienenerhöhung 94 kann alternativ von außen auf die Tragschiene 16 aufgesteckt werden. Die Tragschienenerhöhung 94 ist durch eine Erhebung 95 gekennzeichnet, die unter Bezugnahme auf Fig. 3D noch näher erläutert werden wird. Die Erhebung 95 steht über die Oberseite der Tragschiene 16 hinaus und bewirkt zusammen mit dem Anschlag 46 des Schlittens 36, wenn sich der Schlitten 36 in der Stoppstellung befindet, die Blockade von Bügeln 12 in einem Zwischenraum 96, der sich zwischen dem ausgefahrenen Anschlag 46 und der Oberseite der Tragschiene 16 ausbildet, wie es nachfolgend ebenfalls noch genauer beschrieben werden wird.

In Fig. 3A ist eine Situation gezeigt, in der drei Bügel 12-1 bis 12-3 von ihren zugehörigen Klinkenmitnehmern 14 bereits getrennt sind, von denen wiederum lediglich der Klinkenmitnehmer 14-3 in Form seiner Klinke 64-3 dargestellt ist. Der Klinkenmitnehmer 14-3 hat sich gerade von dem Bügel 12-3 gelöst, so dass der Bügel 12-3 außer Eingriff mit dem Klinkenmitnehmer 14-3 ist.

Fig. 3B zeigt die Draufsicht zur Seitenansicht der Fig. 3A.

Fig. 3C zeigt eine vergrößerte Darstellung eines Teils der Fig. 3A. Aus Gründen der Vereinfachung der Darstellung ist lediglich die Klinke 64 gezeigt. Die Klinke 64 sitzt mit ihrer Unterseite auf einer Oberseite des Anschlags 46 des Schlittens 36 auf und wird über die Oberseite des Anschlags 46 in der Förderrichtung 60 gezogen. Zwischen dem Anschlag 46 und der Tragschiene 16 ist der Zwischenraum 96 vorgesehen. Die Unterseite des Anschlags 46 liegt in einer Ebene E1, die sich parallel zu einer zweiten Ebene E2 erstreckt, die durch die Oberseite (Gleitfläche 110) der Tragschiene 16 definiert ist. Der Abstand der ersten Ebene E1 von der zweiten Ebene E2 entspricht einer Höhe H1 des Zwischenraums 96.

Eine an dem stromaufwärts gelegenen Ende der Klinke 64 positionierter Hakennase 98, die einen Aufnahmebereich bzw. Schlitz 100 in der Klinke 64 definiert, liegt hier oberhalb der ersten Ebene E1 und oberhalb der zweiten Ebene E2. Dies bewirkt, dass die Haken 18 außer Eingriff mit der Klinke 64 kommen, d.h. gelöst sind.

Ferner erkennt man in der Fig. 3C, dass neben dem dritten Bügel 12-3 bzw. dem Haken 18-3 bereits der erste Bügel 12-1 und der zweite Bügel 12-2 im Zwischenraum 96 gestaut sind. Die Erhebung 95 verhindert, dass die Bügel 12-1 und 12-2 den Zwischenraum 96 in der Förderrichtung 60 verlassen können, in dem sich der Zwischenraum 96 stromabwärts verjüngt.

Die Tragschienenerhöhung 94 mit ihrer Erhebung 95 ist in der Fig. 3D deutlicher dargestellt. Die Tragschienenerhöhung 94 weist in der stromabwärtigen Richtung, in der Seitenansicht der Fig. 3D eine gegenüber der Tragschiene 16 ansteigende Flanke 104, ein vorzugsweise parallel zur Tragschiene 16 verlaufendes Plateau sowie eine abfallende Flanke 108 auf. Die Tragschienenerhöhung 94 hat in der Längsrichtung X eine Länge X0-X7. In einem ersten Abschnitt, der sich von X0-X2 erstreckt, weist die Tragschienenerhöhung 94 eine gleiche Höhe wie die Tragschiene 16 auf. Dies bedeutet, dass eine Oberseite der Tragschienenerhöhung 94 im Bereich X0-X2 in der gleichen Ebene wie die Gleitfläche 110 der Tragschiene 16 liegt. Die ansteigende Flanke 104 erstreckt sich von X2-X3, wobei sich die Höhe stetig bis fast H1 erhöht. Das Plateau 106 erstreckt sich von X3-X5 nahezu auf der Höhe H1. Das Plateau 106 liegt leicht tiefer als die Unterseite des Anschlags 46 des Schlittens 36, um Kollisionen zu vermeiden. Die abfallende Flanke 108 erstreckt sich von X5-X6, wobei sich die Höhendifferenz relativ zur Gleitfläche 110 wieder auf Null verringert. Ein zur Tragschiene 16 niveaugleicher Endabschnitt, der in Fig. 3D nicht näher bezeichnet ist, erstreckt sich von X6-X7.

Der Anschlag 46 weist in der Höhenrichtung Y eine Stärke bzw. Dicke D auf. In der Längsrichtung X erstreckt sich der Anschlag 46 von X1-X4. Die relative Lage der Erhebung 95 zum Anschlag 46 ist so zu wählen, dass kein Bügel 12 - in Abhängigkeit von der (Draht-)Stärke des Hakens 18 - den Zwischenraum 96 unabsichtlich passieren kann. Der Anschlag 46 kann so gelagert sein, dass er leicht der positiven Y-Richtung nachgibt. Dies wird nachfolgend noch näher erläutert werden. Vorzugsweise überlappt der Anschlag 46 zumindest einen Teil des Plateaus 106. Die Höhe des Plateaus 106 ist so gewählt, dass der Anschlag 46 beim Ausfahren in Stoppstellung nicht mit der Erhebung 95 kollidiert.

Fig. 3E zeigt die Darstellung der Fig. 3D in weiter abstrahierter Form im Schnitt, wobei die Tragschienenerhöhung 94 nicht gezeigt ist. Die dargestellte Schnittebene liegt in der XY-Ebene mittig in der Tragschiene 16 hinsichtlich deren Z-Erstreckung. Der Haken 18 besteht hier aus einem kreisrunden Draht. Es versteht sich, dass andere Querschnittsgeometrien gewählt werden können. Ein Zentrum bzw. Mittelpunkt M liegt in einer Höhe H2, die unterhalb der Unterseite des Anschlags 46 liegt, die die Höhe H1 aufweist. Die Höhe H2 der Mitte M des Hakens 18 hängt vom Drahtdurchmesser sowie einem Durchmesser des Bügelkopfs ab, der in der YZ-Ebene liegt (vgl. Fig. 1A). In der Fig. 1A liegt der Kopf des Bügels 18 an zwei Punkten auf der Tragschiene 16 auf, so dass der Scheitel des Kopfs oberhalb der Gleitfläche 110 liegt. Die Fig. 3E zeigt einen Schnitt entlang der Längsrichtung X durch diesen Scheitelpunkt.

Diese spezielle Geometrie gewährleistet, dass der Haken 18 unter den Anschlag 46 abtauchen kann, wenn die Klinke 64 den Haken 18 nicht freigegeben hat. Dies ist insbesondere dann der Fall, wenn der Anschlag 46 beim Verfahren aus der Freigabestellung in die Stoppstellung einen Klinkenmitnehmer 14 an seinem stromabwärts gelegenen Ende trifft, der Klinkenmitnehmer 14 aber noch einen Bügel 12 hält. Der Schlitz 100 (vgl. Fig. 3C) ist so ausgebildet, dass sich ein im Eingriff befindlicher Bügel 12 in der vertikalen Richtung Y bewegen kann.

Die soeben diskutierte Situation (Fig. 2B) birgt also generell die Gefahr, dass es zu einer Beschädigung des Hängeförderers 10 kommt. Diese Beschädigung wird vermieden, indem der noch im Eingriff befindliche Bügel 12 den Anschlag 46 gegen die Kraft der Federeinrichtung 42 zurückbewegt (vgl. Pfeil 90 in Fig. 2B unten). Diese Funktionsweise wird nachfolgend unter Bezugnahme auf die Figuren 4A und 4B erläutert werden, die in Zusammenschau mit den Figuren 3D und 3E zu sehen sind.

Die Figuren 4A und 4B zeigen Draufsichten zu unterschiedlichen Zeitpunkten auf, das in den Figuren 3D und 3E gezeigte System.

In der Fig. 4A ist ein Zustand wie in Fig. 2B gezeigt, bei dem der Anschlag 46 aus seiner Freigabestellung in die Stoppstellung bewegt wird, aber durch die Klinke 64 daran gehindert wird, vollständig in die Stoppstellung auszufahren. In der Fig. 4A stößt die Stirnseite des Anschlags 46 an eine Seitenfläche der Klinke 64, die einen Haken 18 im Eingriff hat. Der Anschlag 46 kann nicht weiter ausgefahren werden, selbst wenn der Antrieb 38 weiterhin aktiviert bleibt. Die Federeinrichtung 42 nimmt die vom Antrieb 38 ausgeübte Kraft auf, indem sie gestaucht wird (vgl. Fig. 2B oben). Die (hier nicht dargestellt) Förderkette wird dann weiter stromabwärts in der Förderrichtung 60 bewegt, bis sich die in der Fig. 4B gezeigte Situation einstellt, wobei der Haken 18 unter den Anschlag 46 gezogen wird.

Der Anschlag 46 weist an seinem freien Ende 112 eine erste schräge Stirnfläche 114 und eine (optionale) zweite Stirnfläche 116 auf, die parallel zur Seitenfläche der Klinke 64 orientiert sein kann. Die erste schräge Stirnfläche 114 bricht die rechteckige Geometrie des Anschlags 46 im Bereich des freien Endes 112 auf. In diesem Sinne fehlt dem freien Ende 112 eine "Ecke". Diese fehlende Ecke liegt in der Längsrichtung X in einem Bereich der Tragschienenerhöhung 94, wo die ansteigende Flanke 104 angeordnet ist. Die erste schräge Stirnfläche 114 dient als Krafteinleitungsfläche, die benötigt wird, um den Anschlag 46 gegen die Kraft des Antriebs 38 zurückzubewegen.

Sobald der Haken 18 den Anschlag 46 berührt, weil die Förderbewegung natürlich fortgesetzt wird, wird er aufgrund der speziellen Anordnung (vgl. Fig. 3E) sowie seiner Geometrie und der Geometrie des Schlitzes 100 in der Klinke 64 unter den Anschlag 46 gezogen. Sobald der Haken 18 die ansteigende Flanke 104 (vgl. Fig. 3D) erreicht, verjüngt sich der Zwischenraum 96. Die Förderbewegung hält aber weiterhin an. Auf der dem Anschlag 46 gegenüberliegenden (freien) Seite ist für den Haken 18 Raum, um sich vertikal nach oben zu bewegen. Die fortgesetzte Förderbewegung resultiert dann in einer Drehbewegung 120 des Hakens 18, da der Haken 18 auf der dem Anschlag 46 zugewandten Seite durch die ansteigende Flanke 104 geklemmt wird.

Sobald sich der Haken 18 in die in der Fig. 4B gezeigte Stellung gedreht hat, übt er eine Kraft F auf die erste schräge Stirnfläche 114 aus, die die Rückzugsbewegung 90 (Fig. 2B unten) des Anschlags 46 bewirkt. Dann ist der Weg frei für den im Eingriff befindlichen Haken 18, um die Stopper-Einheit 30 in der Förderrichtung 60 zu passieren. Eine Beschädigung wird vermieden.

Die erste Stirnfläche 114 bildet mit der Längsrichtung X der Tragschiene 16 einen Winkel α. Der Winkel α beträgt z.B. 45° und liegt üblicherweise in einem Bereich von 45° ± 25 °.

Fig. 5 zeigt eine abgewandelte Form für den Anschlagabschnitt 84 des Schlittens 36. Die Stirnseite des Anschlags 46 ist über ihre gesamte Länge schräg relativ zur Längsrichtung X orientiert. Das freie Ende 112 weist eine spitz zulaufende Spitze 118' auf, wohingegen die Spitze 118 des Anschlags 46 der Figuren 4A und 4B einen rechten Winkel definiert.

Bei der oben stehenden Beschreibung der Erfindung wurden gleiche Teile und Merkmale mit gleichen Bezugszeichen versehen, wobei die in der gesamten Beschreibung enthaltenen Offenbarungen sinngemäß auf Teile und Merkmale mit gleichen Bezugszeichen übertragen werden können. Lageangaben wie z.B. "oben", "unten", "seitlich", "vertikal", "horizontal", etc. sind auf die unmittelbar beschriebenen Figuren bezogen und bei einer Lageänderung sinngemäß auf die neue Lage zu übertragen.

Ferner ist zu beachten, dass Richtungsangaben und Orientierungen zugrunde gelegt wurden, die sich grundsätzlich in der (Intra-) Logistik üblichen Bezeichnungen anlehnen. Folglich wird die Längsrichtung (Förderrichtung) mit "X", die Tiefe (Breite) mit "Z" und die (vertikale) Höhe mit "Y" bezeichnet. Den Figuren kann jeweils ein korrespondierendes (kartesisches) Koordinatensystem X, Y, Z entnommen werden.

## Patentansprüche

1. Nachträglich installierbare Stopper-Einheit (30) für einen Hängeförderer (10), der einen Klinkenmitnehmer (14) in einem zumindest einseitig offenen Schlitz (72) einer Tragschiene (16), auf welcher Bügel (12) durch Klinkenmitnehmer (14) gleitend transportiert werden, stromabwärts in einer Förderrichtung (60) transportiert, die parallel zur Längsrichtung (X) der Tragschiene (16) orientiert ist, mit:
einer Führung (34), die an dem Hängeförderer (10) befestigbar ist;
einem Schlitten (36), der einen Anschlagabschnitt (84) aufweist, wobei der Schlitten (36) mittels der Führung (34), vorzugsweise linear, in einer Querrichtung, die quer zur Längsrichtung (X) orientiert ist, beweglich gelagert ist; und
einem Antrieb (38), der an den Schlitten (36) gekoppelt ist und der ausgebildet ist, während seiner Aktivierung den Schlitten (36) aus einer Freigabestellung (Fig. 2A und 2B), in welcher der Anschlagabschnitt (84) des Schlittens (36) die Tragschiene (16) nicht überragt, so dass die Bügel (12) den Schlitten (36) passieren können, entlang der Querrichtung in eine Stoppstellung (Fig. 2C) auszufahren, in welcher der Anschlagabschnitt (84) die Tragschiene (16) über ihre gesamte Breite (B) überragt, so dass die Bügel (12) durch den Anschlagsabschnitt (84) freigegeben und aufgestaut werden, während die Klinkenmitnehmer (14) stromabwärts bewegt werden;
wobei der Schlitten (36), wenn der Antrieb (38) aktiviert ist, im Falle einer Krafteinwirkung in der Querrichtung in die Freigabestellung (Fig. 2A und 2B) zurückziehbar ist und im Falle einer Krafteinwirkung, die ausschließlich in der Längsrichtung wirkt, in seiner momentanen Stellung verbleibt.

2. Stopper-Einheit nach Anspruch 1, wobei der Anschlagabschnitt (84) an seinem, zur Tragschiene (16) orientierten, freien Ende (112) eine erste Stirnfläche (114) aufweist, die schräg zur Längsrichtung (X) orientiert ist, so dass das freie Ende (112) stromaufwärts eine Spitze (118, 118') definiert.

3. Stopper-Einheit nach Anspruch 2, wobei der Anschlagabschnitt (84) eine zweite Stirnfläche (116) aufweist, die parallel zur Längsrichtung (X) orientiert ist und die sich stromaufwärts an die erste Stirnfläche (114) anschließt, wobei die zweite Stirnfläche (116) die Spitze (118) definiert.

4. Stopper-Einheit nach einem der Ansprüche 1 bis 3, die ferner aufweist:
eine Federeinrichtung (42), die zwischen dem Schlitten (36) und dem Antrieb (38) angeordnet ist, so dass der Schlitten (36) bei aktiviertem Antrieb (38) in die Freigabestellung zurück bewegbar ist, wobei der Schlitten (36) vorzugsweise einen Federkontaktabschnitt (88) aufweist.

5. Stopper-Einheit nach Anspruch 4, wobei der Antrieb (38) einen Zylinder (52) mit einer Kolbenstange (50) aufweist, wobei die Kolbenstange (50) mit einem Verbindungselement (48) verbunden ist, wobei das Verbindungselement (48) mit einem Schaft (45) verbunden ist, der frei beweglich in einer Öffnung (89) des Schlittens (36) gelagert ist, und wobei die Federeinrichtung (42) zwischen dem Schlitten (36) und dem Verbindungselement (48) angeordnet ist.

6. Stopper-Einheit nach einem der Ansprüche 1 bis 5, die ferner aufweist:
eine Tragschienenerhöhung (94), die mit der Tragschiene (16) verbindbar ist und die so ausgebildet ist, dass sich eine Höhe (H) eines Zwischenraums (96) zwischen der Tragschiene (16) und dem, die Tragschiene (16) in der Stoppstellung (Fig. 2C) überragenden, Schlitten (34) stromabwärts derart verringert, dass ein Bügel (12), der nicht im Eingriff mit einem der Klinkenmitnehmer (14) ist, zwar in den Zwischenraum (96) eindringen, aber den Zwischenraum (96) nicht stromabwärts passieren kann.

7. Stopper-Einheit nach Anspruch 6, wobei die Tragschienenerhöhung (94) an eine Form der Tragschiene (16) derart angepasst ist, dass die Tragschienenerhöhung (94) einen Teil der Tragschiene (16) ersetzt oder von außen auf die Tragschiene (16) aufsteckbar und dort fixierbar ist.

8. Stopper-Einheit nach Anspruch 6 oder 7, wobei die Tragschienenerhöhung (94) eine Erhebung (95) aufweist, die über eine Gleitfläche (110) der Tragschiene (16) hinausragt und die vorzugsweise eine ansteigende Flanke (104), ein zur Gleitfläche (110) parallel verlaufendes Plateau (106) sowie eine abfallende Flanke (108) aufweist.

9. Stopper-Einheit nach einem der Ansprüche 1 bis 8, wobei jeder Bügel (12) einen Bügelkopf aufweist, der in einem Zustand, in welchem der Bügel (12) auf der Tragschiene (16) gleitend transportiert wird, einen, vorzugsweise runden, Querschnitt mit einem Zentrum in einer Ebene (XY) senkrecht zur Querrichtung (Z) aufweist, und wobei eine Unterseite des Anschlagabschnitts (84) in einer Höhe (H) relativ zu einer Gleitfläche (110) der Tragschiene (16) angeordnet ist, die größer als eine Höhe (H2) des Zentrums relativ zur Gleitfläche (110) ist.

10. Stopper-Einheit nach einem der Ansprüche 1 bis 9, wobei der Schlitten (36) ferner einen Führungsabschnitt (86) aufweist und wobei die Führung (34) eine Schlittenführungsschiene (35) aufweist, die so ausgebildet ist, dass der Führungsabschnitt (86), vorzugsweise formschlüssig, entlang der Querrichtung gleitet.

11. Stopper-Einheit nach einem der Ansprüche 1 bis 10, wobei der Antrieb (38) ein Gehäuse (54) aufweist und wobei die Führung (34) das Gehäuse (54) umfasst.

12. Stopper-Einheit nach einem der Ansprüche 1 bis 11, wobei die Gleitfläche (110) der Tragschiene (16) und eine Unterseite des Anschlagabschnitts (84) in zwei zueinander parallelen, beabstandeten Ebenen (E1, E2) liegen.

13. Stopper-Einheit nach einem der Ansprüche 1 bis 12, wobei der Anschlagabschnitt (84) relativ zu einem der Klinkenmitnehmer (14), der im Eingriff mit einem Bügel (12) ist und der die Stopper-Einheit gerade passiert, während einer Bewegung in die Stoppstellung (Fig. 2B) in einer Höhe (H) flexibel auslenkbar ist, die es ermöglichen, dass sich der im Eingriff befindliche Bügel (12) unter dem Anschlagabschnitt (84) in der Förderrichtung bewegen lässt.
